# EUROPEAN PATENT APPLICATION

(11) **EP 4 757 164 A1**
(43) Date of publication of application: **10.06.2026**
(21) Application number: 25218318.1
(22) Date of filing: 25.11.2025
(51) Int. Cl.: H02P 1/28, H02P 27/16

(54) **INDEPENDENT TRANSISTOR GATE SEQUENCING FOR PRECISION ZERO-CROSS SHUTOFF**

(30) Priority: 06.12.2024 US 202418971856
(71) Applicant: Rockwell Automation Technologies, Inc., Mayfield Heights, OH 44124 (US)
(72) Inventor: Carlson, Andrew E., Mayfield Heights, OH, 44124 (US); Adkins, Kyle B., Mayfield Heights, OH, 44124 (US); Messersmith, David M., Mayfield Heights, OH, 44124 (US)
(74) Representative: Grünecker Patent- und Rechtsanwälte PartG mbB

(57) **Abstract**

The present technology relates to soft-starts of alternating current (AC) motors, and particularly, to controlling a soft-start of an AC motor using a configuration of transistors and diodes. A system may include processing circuitry and gating circuitry. The gating circuitry may include a first transistor coupled to an AC voltage supply, a second transistor coupled to the first transistor and to an AC motor, a first diode coupled across current path terminals of the first transistor, and a second diode coupled across current path terminals of the second transistor. The processing circuitry may be configured to monitor voltage and current of the AC voltage supply and provide gating signals to the control terminals of the first and second transistors to control operations of the first and second transistors based at least in part on one or more desired firing angles and the voltage or current of the AC voltage supply.

## Description

### TECHNICAL FIELD

Various embodiments of the present technology relate to transistor gate sequencing, and particularly, to using transistor gate sequencing to control current for precision zero-cross shutoff.

### BACKGROUND

Identifying zero-cross and performing precision zero-cross shutoff may be helpful in many applications. For example, soft-starting an alternating current (AC) motor uses zero-cross shutoff. Performing a soft-start refers to providing a limited amount of AC power to the AC motor to slowly ramp the AC motor to the normal operating voltage. In existing applications, soft-starting an AC motor is typically achieved by periodically firing the gate of a Silicon Controlled Rectifier (SCR) or thyristor to control the current flow to the motor. The benefit of using a thyristor is the gate only needs to be activated for a short time and then the semiconductor will turn off when current reaches zero-cross. A drawback of using an SCR includes thermal inefficiencies. Another drawback is that SCRs cannot stop current flow once activated. While technologies including silicon carbide provide better thermal efficiency and the ability to stop current flow, they require careful gate control to replicate SCR soft-starting sequencing, which introduces complexity and cost in a motor start controller design.

### SUMMARY

Systems, devices, and methods are provided herein for controlling a soft-start of an alternating current (AC) motor using gating circuitry including a pair of transistors and a corresponding pair of diodes. A soft-start of an AC motor refers to providing a limited amount of AC power to the AC motor not currently in operation to slowly ramp the AC motor to the normal operating voltage as opposed to directly providing AC power to the AC motor, which may drive a large inrush of current to the AC motor. The soft-start is controlled by gating the transistors of the gating circuity allowing or preventing current flow from an AC power source to the AC motor. Both the voltage from the AC power source and the current flow through the gating circuitry (e.g., AC motor current) can be monitored, and the transistors can be gated based on the voltage and current flow.

In an embodiment of the present technology, a soft-start motor control system is provided that includes processing circuitry and gating circuitry. The gating circuitry includes a first transistor coupled to an AC voltage supply, a second transistor coupled to the first transistor and to an AC motor, a first diode coupled current path terminals of the first transistor, and a second diode coupled across current path terminals of the second transistor. The processing circuitry is configured to monitor voltage and current of the AC voltage supply and provide gating signals to the control terminals of the first and second transistors to control operations of the first and second transistors based at least in part on one or more desired firing angles and the voltage or current of the AC voltage supply.

In another embodiment, a method of controlling a soft-start of an AC motor is provided. The method includes monitoring a voltage of an AC voltage supply, and responsive to determining that the AC voltage supply has reached a first desired firing angle, transmitting gating signals to control terminals of first and second transistors to allow current flow from the AC voltage supply to the AC motor through respective first and second current path terminals of the first and second transistors. The method also includes, prior to a current of the AC voltage supply reaching zero-cross, transmitting the gating signals to the control terminal of the second transistor to prevent the current flow through the first and second current path terminals of the second transistor. The current flow bypasses the second transistor via a first diode coupled to the second transistor. Then, the method includes, responsive to determining an amount of the current flow through the first transistor falls below a current threshold, transmitting the gating signals to the control terminal of the first transistor to prevent the current flow through the first and second current path terminals of the first transistor. This may prevent current flow from the AC voltage supply to the motor.

In yet another embodiment, a method of controlling a soft-start of an AC motor is provided. The method includes monitoring a current of an AC voltage supply, and responsive to determining that the AC voltage supply has reached a first desired firing angle, transmitting gating signals to control terminals of first and second transistors to allow current flow from the AC voltage supply to the AC motor through respective first and second current path terminals of the first and second transistors. The method also includes, prior to the current of the AC voltage supply reaching zero-cross, transmitting the gating signals to the control terminal of the second transistor to prevent the current flow through the first and second current path terminals of the second transistor. Thus, the current flow bypasses the second transistor via a first diode coupled to the second transistor. The method also includes, responsive to determining that the AC voltage supply has reached a second desired firing angle, transmitting the gating signals to the control terminals of the first and second transistors to allow current flow from the AC voltage supply to the AC motor through respective first and second current path terminals of the first and second transistors. Next, the method includes, prior to the current of the AC voltage supply reaching the zero-cross, transmitting the gating signals to the control terminal of the first transistor to prevent the current flow through the first and second current path terminals of the first transistor. Thus, the current flow bypasses the first transistor via a second diode coupled to the first transistor.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

While multiple embodiments are disclosed, still other embodiments of the present technology will become apparent to those skilled in the art from the following detailed description, which shows and describes illustrative embodiments of the invention. As will be realized, the technology is capable of modifications in various aspects, all without departing from the scope of the present invention. Accordingly, the drawings and detailed description are to be regarded as illustrative in nature and not restrictive.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an example operating environment in accordance with some embodiments of the present technology.
Figures 2A and 2B illustrate example methods for operating a soft-start motor control system in accordance with some embodiments of the present technology.
Figure 3 illustrates an example operating environment in accordance with some embodiments of the present technology.
Figure 4 illustrates an example block diagram of a soft-start motor controller in accordance with some embodiments of the present technology.
Figures 5A, 5B, 5C, 5D, and 5E illustrate example aspects of gating circuitry of a soft-start motor controller and resulting current flow through the elements during soft-start operations in accordance with some embodiments of the present technology.
Figure 6 illustrates example graphical representations related to a soft-start of a motor in accordance with some embodiments of the present technology.
Figure 7 illustrates an example block diagram of a soft-start motor controller in accordance with some embodiments of the present technology.
Figure 8 illustrates example graphical representations related to a soft-start of a motor in accordance with some embodiments of the present technology.
Figure 9 illustrates an example computing system used in some embodiments of the present technology.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

Technology is disclosed herein that mitigates the problems discussed above with respect to soft-starting an alternating current (AC) motor, and more generally to precision zero-cross shutoff, by utilizing transistor-diode sub-circuits controllable based on desired firing angles and voltage from a voltage supply. In industrial or commercial environments, AC motors are used to power various devices to perform industrial automation processes. Often, AC motors are soft-started to reduce voltage spikes, overcurrent draw, and latency to run-time operations of the AC motors. A soft-start refers to limiting an amount of current to an AC motor during an initialization of the AC motor until the AC motor reaches a run-time operational voltage. Existing soft-start solutions use silicon-controller rectifiers (SRCs) and/or thyristors, however, such solutions have drawbacks. Such drawbacks include thermal inefficiencies, an inability to stop current flow once turned on, and complex gate sequencing to control the soft-start process. Stopping current flow is especially important in zero-cross shutoff applications as failing to restrict current flow during changes in voltage polarity can cause existing soft-start systems to output voltage spikes to a downstream device/system (e.g., the motor).

To address these issues, a soft-start motor controller described herein employs gating circuitry that includes pairs of transistor-diode circuits that are configured to allow or stop current flow from the power supply to the motor based on gating signals sent from the controller. Each transistor-diode circuit includes a transistor with a bypass diode coupled across the current path terminals (e.g., emitter and collector terminals, source and drain terminals) of the transistor. The configuration of the diode relative its respective transistor is based on its location with respect to the other transistor-diode circuit. Specifically, in one of the two transistor-diode circuits, the direction of the diode allows current flow to continue in one direction when its respective transistor is off, and the second of the two transistor-diode circuits includes the diode in the opposite direction, ensuring that current can continue to flow in the opposite direction even when its respective transistor is off. Accordingly, the diodes also ensure current is stopped in the opposing direction when its respective transistor is off. Accordingly, in some gating scenarios, the diodes allow current flow to continue despite its respective transistor being off. Additionally, the diodes prevent current flow in some gating scenarios, such as near zero-cross (when the load (e.g., motor) current reaches zero (0) amps and transitions from positive-to negative polarity or negative-to-positive polarity), alleviating current stoppage issues with SCRs and thyristors with respect to both soft-start applications and zero-cross shutoff applications. The gating circuitry may be coupled across three-phase power lines to limit current in each of the three phases during a soft-start of a three-phase AC motor. As described in detail below, the gating circuitry allow for configurable gating scenarios ensuring precision zero-cross shutoff.

Embodiments of the present disclosure will be described in specific contexts, such as in soft-starting AC motors (e.g., an AC induction motor). Some embodiments may be used in other applications, such as zero-cross detection solutions, and with other types of motors, electrical devices, and electro-mechanical devices. For example, some embodiments may be used in gating applications that require detection of a zero-cross and precision control during zero-cross transition events.

Advantageously, the disclosed system can provide for gating control for a soft-start of a motor (e.g., an AC motor) while improving thermal efficiency, current flow control efficiency, and zero-cross shutoff precision, among other benefits. The motor control system can use processing circuitry to control current flow from a power supply to a motor through gating circuitry that includes sets of transistor-diode circuits. The system can monitor voltage of the power supply, identify desired firing angles associated with the gating circuitry relative to the voltage of the power supply, and allow current flow or restrict current flow based on reaching one or more of the desired firing angles. Not only does the motor control system alleviate issues introduced in soft-start applications that use SCRs and/or thyristors (e.g., thermal efficiency), but also it can reduce potential damage to the motor by stopping current before a precise current zero-cross based on the configuration of the transistor-diode circuits in the gating circuitry.

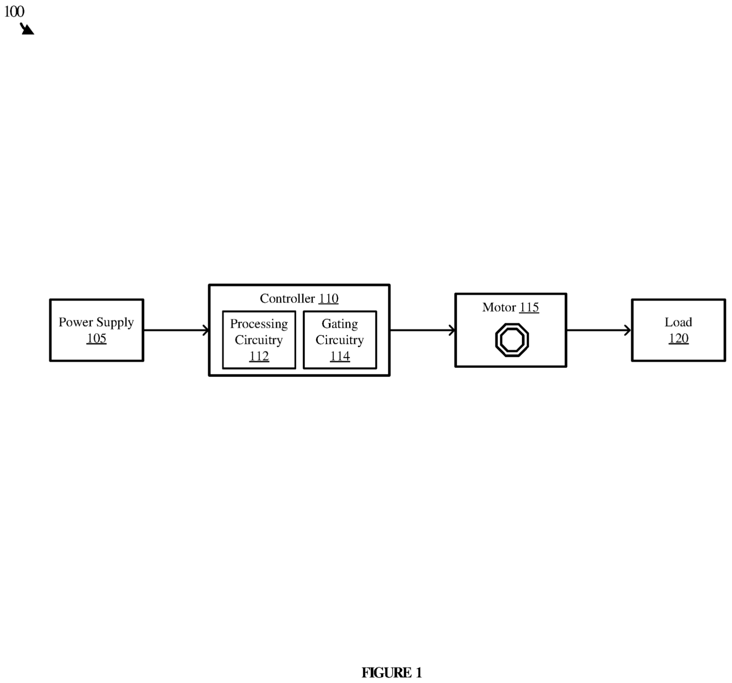

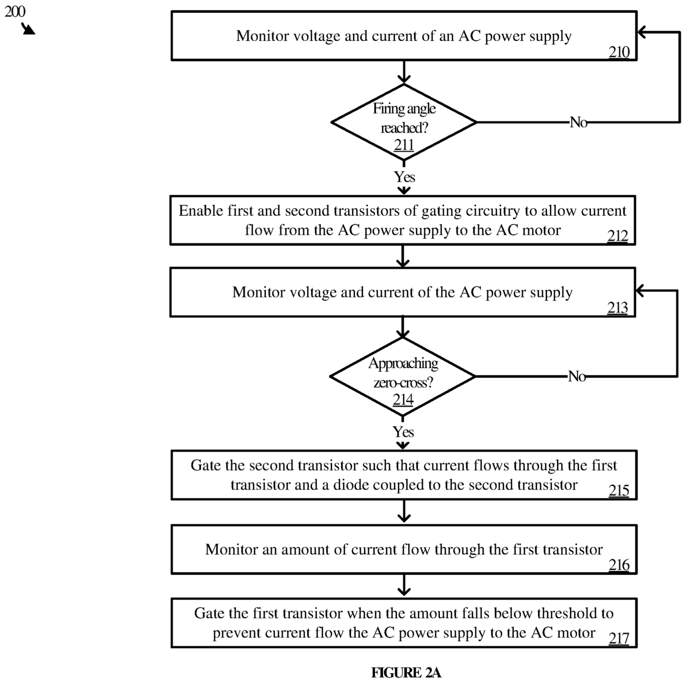

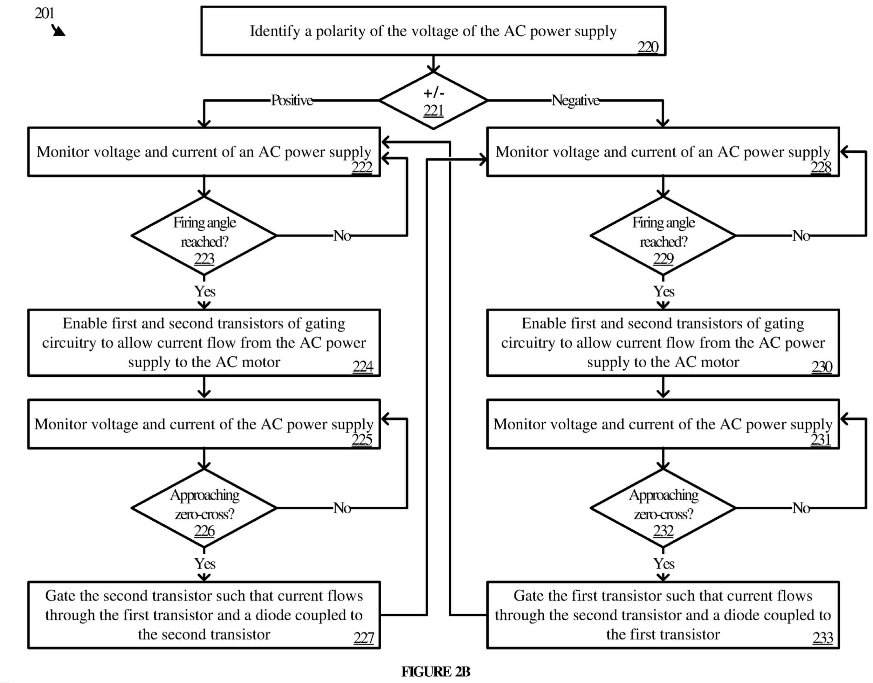

Turning now to the Figures, **Figure 1** illustrates an example operating environment in accordance with some embodiments of the present technology. Figure 1 includes operating environment 100, which is representative of an environment in which industrial and commercial processes may be performed, and in which motor 115 can be soft-started by controller 110. Operating environment 100 includes power supply 105, controller 110, motor 115, and load 120. Controller 110 includes processing circuitry 112 and gating circuitry 114. In various embodiments, controller 110 is configured to perform soft-start operations, such as soft-start methods 200 and 201 of Figures 2A and 2B, respectively.

In operating environment 100, power supply 105 is representative of an alternating current (AC) power source. For example, power supply 105 is representative of AC mains electricity capable of producing power categorized under Class 1 or Class 2 power of the National Electrical Code (NEC). In some embodiments, power supply 105 is instead representative of a direct current (DC) power source, such as a rectifier or fuel cell. Power supply 105 is coupled to controller 110, and as such, provides power to controller 110 to enable operations thereof.

Controller 110 is representative of a control device capable of receiving power from power supply 105 and providing the power to motor 115 to control operations of motor 115. More specifically, controller 110 is capable of controlling an amount of the power provided to motor 115 to enable a soft-start of motor 115. To do so, controller 110 includes gating circuitry 114 and processing circuitry 112, which can control elements of gating circuitry 114 to allow current flow from power supply 105 to motor 115 at certain times and prevent current flow from power supply 105 to motor 115 at other times.

Processing circuitry 112 is representative of one or more processors, processing cores, or processing circuits capable of interfacing with power supply 105 to receive power from power supply 105, monitoring the voltage from power supply 105, and transmitting enable signals (also referred to as gating signals) to gating circuitry 114 to control current flow through gating circuitry 114. Processing circuitry 112 may generate and output the enable signals based on desired firing angles associated with gating circuitry 114 and based on the voltage from power supply 105. Examples of such processor(s) of processing circuitry 112 include - but are not limited to - microcontrollers, general purpose processing units, central processing units (CPUs), graphical processing units (GPUs), digital signal processors (DSPs), application specific processors or circuits (e.g., ASICs), and logic devices (e.g., FPGAs), as well as any other type of processing device, combinations, or variations thereof.

Gating circuitry 114 is representative of various electronic and electro-mechanical elements capable of interfacing with power supply 105 to receive power from power supply 105, with processing circuitry 112 to receive the enable signals from processing circuitry 112, and with motor 115 to provide power to motor 115 at various times based on the enable signals provided by processing circuitry 112. In various examples, gating circuitry 114 includes one or more switching sub-circuits that each include a pair of gating assemblies. More specifically, in examples where power supply 105 is an AC power source that provides three-phase AC power via three lines, and motor 115 is an AC motor, gating circuitry 114 includes three switching sub-circuits. Each switching sub-circuit is coupled to a line of power supply 105 and to one of three inputs of motor 115 to control an amount of power provided from power supply 105 to motor 115 for a given phase.

Referring to a single switching sub-circuit for the sake of simplicity and brevity, the switching sub-circuit includes a pair of gating assemblies. A first gating assembly includes a transistor and a diode coupled to each other, and a second gating assembly includes another transistor and diode coupled to each other. In various examples, the transistors are metal-oxide semiconductor field effect transistors (MOSFETs). In some examples, the transistors may instead be insulated-gate bipolar transistors (IGBTs), junction field effect transistors (JFETs), bipolar junction transistors (BJTs), or other types of transistors, as well as combinations or variations of transistors.

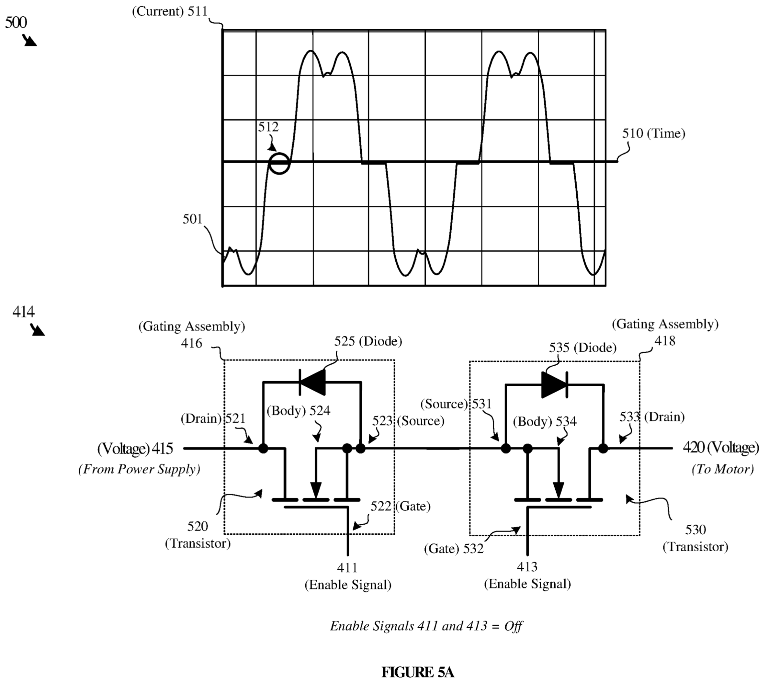

The transistors of a switching sub-circuit of gating circuitry 114 each include a first current path terminal (e.g., a drain), a second current path terminal (e.g., a source), a control terminal (e.g., a gate), and a body terminal. The diodes of gating circuitry 114 may be forward-biased diodes each including an anode terminal and a cathode terminal. In some examples, the diodes of gating circuitry 114 are external diodes relative to the transistors. In some examples, the diodes are instead diodes included in the transistors (e.g., body diodes). The first gating assembly may be configured to couple to a line of power supply 105, to processing circuitry 112, and to the second gating assembly. The second gating assembly may be configured to couple to an input of motor 115 and to processing circuitry 112. Additional details of the configuration of the gating assemblies are shown and described in at least Figures 5A-5E below and are excluded here for the sake of brevity.

In this configuration, when the transistors of the gating assemblies are enabled (i.e., processing circuitry 112 transmits enable signals to the control terminals of the transistors to cause the transistors to function as closed switches allowing current flow through the current path terminals of the transistors), current flows from power supply 105 through the transistors to motor 115 to power motor 115. When the transistors are disabled (i.e., processing circuitry 112 transmits enable signals to the control terminals of the transistors to cause the transistors to function as open switches preventing current flow through the current path terminals of the transistors), current flow is prevented from power supply 105 through the transistors to motor 115. To enable or disable such gating/switching functionality of the transistors, processing circuitry 112 may change the voltage provided to the control terminals of the transistors such that the transistor functions like an open switch or a closed switch based on the voltage drop across terminals of the transistors. Processing circuitry 112 can control both transistors at the same time and at different times to cause varying amounts of power from power supply 105 to be provided to motor 115. In this way, controller 110 can perform a soft-start of motor 115 to reduce voltage spikes induced by motor 115 and prevent damage to motor 115 during start-up operations.

Motor 115 is representative of any type of motors operating in an industrial, commercial, industrial automation, or similar environment. In various examples, motor 115 includes an AC motor, such as a three-phase AC induction motor. In some examples, motor 115 instead includes a DC motor, a brushless motor, a servomotor, or another type of motor. Motor 115 is coupled to receive power from power supply 105 via controller 110, or in particular, via gating circuitry 114 of controller 110. While only shown as a single input in operating environment 100, motor 115 may include three inputs, and each input may be associated with one of three phases. Upon receiving power, motor 115 outputs power to load 120 (e.g., an industrial or commercial device) to enable functionality of load 120.

In operation, power supply 105 provides power to controller 110. Processing circuitry 112 of controller 110 monitors the voltage and transmits enable signals to gating circuitry 114 based on the voltage and based on desired firing angles associated with elements (e.g., transistors) of gating circuitry 114. In various embodiments, a firing angle corresponds to a timing at which elements of gating circuitry 114 are controlled to operate in a gating state (e.g., as an open switch) or in a non-gating state (e.g., as a closed switch). When controlled to operate as a closed switch, via an enable signal from processing circuitry 112, power supply 105 drives power to motor 115 via gating circuitry 114. When controlled to operate as an open switch, via the enable signal from processing circuitry 112, gating circuitry 114 prevents, or gates, current flow from power supply 105 to motor 115. Based on varying voltage and different desired firing angles relative to time, processing circuitry 112 can enable and disable the states of gating circuitry 114 via enable signals to perform a soft-start of motor 115. Figures 2A and 2B that follow include soft-start control methods 200 and 201, which include steps performed by controller 110 to perform the soft-start of motor 115 in different ways.

**Referring next to** **Figures 2A** **and** **2B****,** Figures 2A and 2B each illustrate a series of steps for performing a soft-start of a motor in accordance with some embodiments of the present technology. Figure 2A includes method 200, and Figure 2B includes method 201, which both reference elements of operating environment 100 of Figure 1. In various embodiments, methods 200 and 201 may be implemented in hardware, software, firmware, or any combination or variation. For example, methods 200 and 201 may be implemented in controller 110 of operating environment 100, and in particular, in processing circuitry 112 of controller 110.

Method 200 of Figure 2A relates to a method of soft-starting a motor in an industrial automation environment, such as motor 115. More specifically, method 200 includes a series of steps during which both transistors of a switching sub-circuit of gating circuitry 114 are enabled to allow current flow (i.e., operating as closed switches in a non-gating state) for a duration, one transistor is enabled while the other transistor is disabled to gate current flow (i.e., operating as an open switch in a gating state) for a duration, and then both transistors are disabled for a duration. Method 201 of Figure 2B also relates to a method of soft-starting motor 115. More specifically, method 201 includes another series of steps during which both transistors are enabled for a duration, then only one of the transistors is disabled for a duration before both transistors are enabled at the same time for a duration. Thus, in method 201, neither transistor is disabled at the same time.

Referring first to method 200 of Figure 2A, in operation 210, processing circuitry 112 receives and monitors voltage and current of power supply 105. In examples where power supply 105 is an AC power source, processing circuitry 112 may receive three-phase AC power, and as such, processing circuitry 112 determines the polarity and amplitude of the voltage provided by power supply 105 for each phase. While method 200 refers to monitoring voltage and current, in various embodiments, either or both voltage and current may be monitored by processing circuitry 112 to accomplish soft-start operations described herein.

In operation 211, processing circuitry 112 determines whether a desired firing angle is reached at a given time based on the voltage provided by power supply 105 at the given time. In various examples, the firing angle corresponds to a timing at which elements of gating circuitry 114 are controlled to operate in a gating state (e.g., as an open switch) or in a non-gating state (e.g., as a closed switch). The firing angle may be based on a point in an AC voltage cycle. Processing circuitry 112 may store various firing angles in association with a phase of the AC power and in association with a transistor(s) of gating circuitry 114. If one or more desired firing angles are not reached, processing circuitry 112 can continue to monitor the voltage output by power supply 105 as in operation 210. Upon determining a desired firing angle is reached, however, processing circuitry 112 proceeds to operation 212.

In operation 212, processing circuitry 112 transmits enable signals to gating circuitry 114 to allow current flow from power supply 105 to motor 115 through gating circuitry 114 (e.g., through transistors of gating circuitry 114). More particularly, processing circuitry 112 transmits the enable signals to control terminals of transistors of gating circuitry 114. This may cause the transistors to function like closed switches, enabling current flow through current path terminals of the transistors such that the power from power supply 105 is provided to motor 115.

While controller 110 provides the power from power supply 105 to motor 115, in operation 213, processing circuitry 112 monitors the voltage and current of power supply 105. Processing circuitry 112 may additionally, or instead, monitor the voltage and/or current through gating circuitry 114 (e.g., the current of motor 115). In operation 214, if the current of power supply 105 is not approaching zero-cross, processing circuitry 112 continues to monitor power supply 105 as in operation 213. Upon determining that the voltage is approaching zero-cross, processing circuitry 112 proceeds to operation 215. In various embodiments, approaching zero-cross may refer to a time after gating circuitry 114 is enabled, and before the voltage of power supply 105 reaches zero volts and/or the current of power supply 105 reaches zero amps. In some embodiments, zero-cross may instead be determined from the perspective of motor 115, such as when the voltage of motor 115 reaches zero volts and/or the current of motor 115 reaches zero amps.

In operation 215, processing circuitry 112 transmits the enable signals to gating circuitry 114 allowing current flow from power supply 105 to motor 115 via a first transistor and a diode coupled to a second transistor (bypassing the second transistor of gating circuitry 114). More specifically, processing circuitry 112 transmits one enable signal to the control terminal of the first transistor causing the first transistor to function like a closed switch, while processing circuitry 112 transmits another enable signal to the control terminal of the second transistor causing the second transistor to function like an open switch. In this way, current from power supply 105 flows through the current path terminals of the first transistor and through a diode coupled to the second transistor to motor 115 despite the second transistor being disabled or off.

Next, in operation 216, processing circuitry 112 monitors an amount of current flow through the first transistor. Alternatively, or additionally, processing circuitry 112 monitors the voltage from power supply 105 at a given time to determine the amount of current flow through the first transistor. At this point in the AC voltage cycle, the voltage from power supply 105 may be a value nearing zero volts indicating a zero-cross event and a transition from positive to negative polarity, or negative to positive polarity.

Prior to the zero-cross event, detected based on the amount of current flow through the first transistor falling below a threshold current, processing circuitry 112 transmits the enable signals to gating circuitry 114 to prevent current flow from power supply 105 to motor 115 in operation 217. More specifically, processing circuitry 112 transmits the enable signals to the control terminals of the transistors of gating circuitry 114 such that both transistors function like open switches. Based on the configuration of the diodes relative to respective transistors, current flow is prevented from power supply 105 to motor 115 via gating circuitry 114.

After the zero-cross event, or after the voltage from power supply 105 transitions from a positive polarity to a negative polarity, processing circuitry 112 repeats similar steps. For example, in following the sequence of the above series of operations, processing circuitry 112 can monitor the voltage of power supply 105, identify a further firing angle associated with the AC voltage cycle, and determine whether the further firing angle is reached based on the voltage of power supply 105. Then, processing circuitry 112 can transmit the gating signals to gating circuitry 114 to allow current flow through the transistors of gating circuitry 114 again (i.e., turn the transistors on). During times when the voltage includes a negative polarity voltage, processing circuitry 112 may disable the first transistor as opposed to the second transistor (e.g., as in operation 215) upon determining a second further firing angle is reached. In this way, current may flow through the diode coupled to the first transistor (bypassing the first transistor) and through the current path terminals of the second transistor to motor 115. Upon approaching another zero-cross event, processing circuitry 112 can once again prevent current flow through gating circuitry 114 based on transmitting the enable signals to gating circuitry 114 to disable the transistors.

Processing circuitry 112 can repeat the above series of steps until motor 115 reaches a run-time operational voltage, and thus, the soft-start operations are no longer required to protect motor 115.

Referring next to method 201 of Figure 2B, in operation 220, processing circuitry 112 initiates the soft-start of motor 115 by determining the polarity of the voltage provided to controller 110 by power supply 105. In operation 221, if processing circuitry 112 identifies that the voltage has a positive polarity, processing circuitry 112 proceeds to operation 222. Otherwise, processing circuitry 112 proceeds to operation 228.

Assuming the voltage has a positive polarity, in operation 222, processing circuitry 112 receives and monitors voltage and current of power supply 105. In operation 223, processing circuitry 112 determines whether a desired firing angle is reached at a given time based on the voltage provided by power supply 105 at the given time. If one or more desired firing angles are not reached, processing circuitry 112 can continue to monitor the output of power supply 105 as in operation 222. Upon determining a desired firing angle is reached, however, processing circuitry 112 proceeds to operation 224.

In operation 224, processing circuitry 112 transmits enable signals to gating circuitry 114 to allow current flow from power supply 105 to motor 115 through gating circuitry 114 (e.g., through transistors of gating circuitry 114). More particularly, processing circuitry 112 transmits the enable signals to control terminals of transistors of gating circuitry 114. This may cause the transistors to function like closed switches, enabling current flow through current path terminals of the transistors such that the power from power supply 105 is provided to motor 115.

While controller 110 provides the power from power supply 105 to motor 115, in operation 225, processing circuitry 112 monitors the voltage and current of power supply 105. Processing circuitry 112 may additionally, or instead, monitor the voltage and/or current through gating circuitry 114 (e.g., the current of motor 115). In operation 226, if the current of power supply 105 is not approaching zero-cross, processing circuitry 112 continues to monitor power supply 105 as in operation 223. Upon determining that the current of power supply 105 is approaching zero-cross, processing circuitry 112 proceeds to operation 227. In various embodiments, approaching zero-cross may refer to a time after gating circuitry 114 is enabled, and before the voltage of power supply 105 reaches zero volts and/or the current of power supply 105 reaches zero amps. In some embodiments, zero-cross may instead be determined from the perspective of motor 115, such as when the voltage of motor 115 reaches zero volts and/or the current of motor 115 reaches zero amps.

In operation 227, processing circuitry 112 transmits the enable signals to gating circuitry 114 to allow current flow from power supply 105 to motor 115 via a first transistor and a diode coupled to a second transistor (bypassing the second transistor of gating circuitry 114). More specifically, processing circuitry 112 transmits one enable signal to the control terminal of the first transistor causing the first transistor to function like a closed switch, while processing circuitry 112 transmits another enable signal to the control terminal of the second transistor causing the second transistor to function like an open switch. In this way, current from power supply 105 flows through the current path terminals of the first transistor and through a diode coupled to the second transistor to motor 115 despite the second transistor being disabled or off.

Unlike method 200, in method 201, processing circuitry 112 might not turn off all of the transistors of gating circuitry 114 prior to the zero-cross event as the configuration of gating circuitry 114 may inherently prevent current flow from power supply 105 to motor 115 when the voltage of power supply 105 is below a threshold voltage, and thus, the current flow through gating circuitry 114 is below a threshold current. More specifically, one or more of the diodes of gating circuitry 114 may prevent the current flow during such times, such that both transistors need not be disabled.

After the zero-cross event and the polarity of the voltage/current transitions from positive to negative, processing circuitry 112 proceeds to operation 228. In operation 228, processing circuitry monitors the voltage of power supply 105. In operation 229, processing circuitry 112 determines whether a desired firing angle is reached at a given time based on the voltage provided by power supply 105 at the given time. If one or more desired firing angles are not reached, processing circuitry 112 can continue to monitor the output of power supply 105 as in operation 228. Upon determining a desired firing angle is reached, however, processing circuitry 112 proceeds to operation 230.

In operation 230, processing circuitry 112 transmits enable signals to gating circuitry 114 to allow current flow from power supply 105 to motor 115 through gating circuitry 114 (e.g., through transistors of gating circuitry 114). More particularly, processing circuitry 112 transmits the enable signals to control terminals of transistors of gating circuitry 114. This may cause the transistors to function like closed switches, enabling current flow through current path terminals of the transistors such that the power from power supply 105 is provided to motor 115.

While controller 110 provides the power from power supply 105 to motor 115, in operation 231, processing circuitry 112 monitors the voltage and current of power supply 105. In operation 232, if the current of power supply 105 is not approaching zero-cross, processing circuitry 112 continues to monitor the voltage as in operation 231. Upon determining that the current of power supply 105 is approaching zero-cross, processing circuitry 112 proceeds to operation 233.

In operation 233, processing circuitry 112 transmits the enable signals to gating circuitry 114 to allow current flow from power supply 105 to motor 115 via a diode coupled to the first transistor (bypassing the first transistor of gating circuitry 114) and through the second transistor. More specifically, processing circuitry 112 transmits one enable signal to the control terminal of the first transistor causing the first transistor to function like an open switch, while processing circuitry 112 transmits another enable signal to the control terminal of the second transistor causing the second transistor to function like a closed switch. In this way, current from power supply 105 flows through the diode coupled to the first transistor and through current path terminals of the second transistor to motor 115 despite the second transistor being disabled or off.

After operation 233 but prior to a further zero-cross event, processing circuitry 112 might not disable the second transistor to prevent current flow from power supply 105 to motor 115. Rather, given the negative voltage polarity and the configuration of gating circuitry 114, the current flow may naturally stop as the voltage approaches zero-cross. Then, after the zero-cross event, processing circuitry 112 can repeat the soft-start method at operation 222 as described above and continue performing the series the operations until motor 115 reaches a run-time operational voltage.

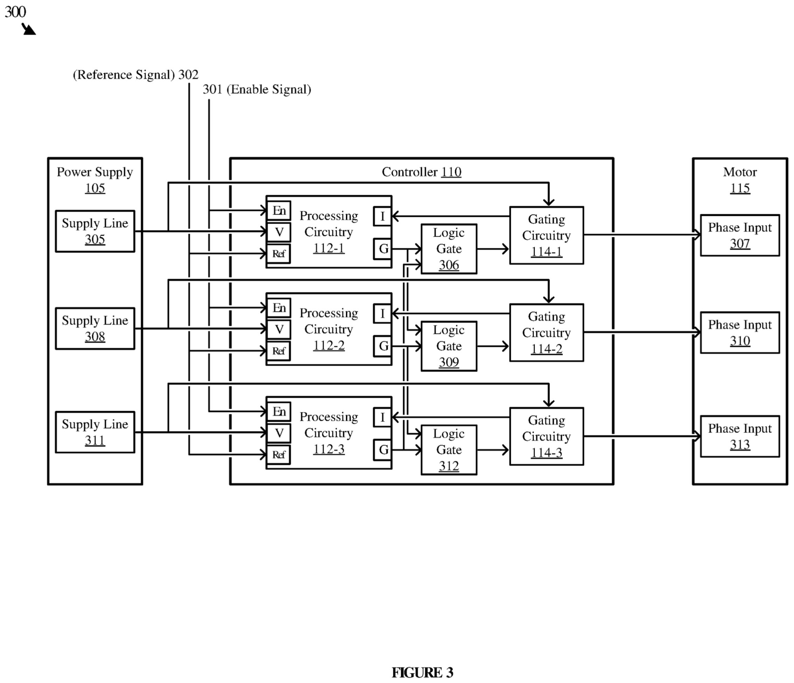

**Figure 3** illustrates an example operating environment in accordance with some embodiments of the present technology. Figure 3 includes operating environment 300, which is representative of an environment in which industrial and commercial processes may be performed, and in which motor 115 can be soft-started by controller 110. Operating environment 300 includes elements of operating environment 100, such as power supply 105, controller 110, and motor 115. In operating environment 300, power supply 105 includes supply lines 305, 308, and 311, controller 110 includes processing circuitry 112-1, 112-2, and 112-3 (collectively referred to as processing circuitry 112), logic gates 306, 309, and 312, and gating circuitry 114-1, 114-2, and 114-3 (collectively referred to as gating circuitry 114), and motor 115 includes phase inputs 307, 310, and 313. In various embodiments, controller 110 is configured to perform soft-start operations, such as soft-start methods 200 and 201 of Figures 2A and 2B, respectively.

In operating environment 300, power supply 105 is representative of an alternating current (AC) power source. (e.g., AC mains) that produces three-phase AC power and outputs the power to downstream elements (e.g., controller 110) via supply lines 305, 308, and 311. Each supply line is coupled to controller 110 and may provide a voltage of one of the three phases to controller 110. For example, supply line 305 may provide a first voltage of a first phase to an input of processing circuitry 112-1, supply line 305 may provide a second voltage of a second phase out-of-phase relative to the first phase (e.g., by 120 degrees) to an input of processing circuitry 112-2, and supply line 311 may provide a third voltage of a third phase out-of-phase relative to the second phase (e.g., by 120 degrees) to an input of processing circuitry 112-3.

Controller 110 is representative of a control device capable of receiving power from power supply 105 and providing the power to motor 115 to control operations of motor 115. More specifically, controller 110 is capable of controlling an amount of the power provided to motor 115 to perform a soft-start of motor 115. To do so, controller 110 includes gating circuitry 114-1, 114-2, and 114-3, logic gates, 306, 309, and 312, and processing circuitry 112-1, 112-2, and 112-3, which can enable and disable operational states (e.g., gating state, non-gating state) of elements of respective ones of gating circuitry 114. When enabled in a non-gating state, the gating circuitry allows current flow from respective supply lines of power supply 105 to respective inputs of motor 115 at certain times, and when disabled, or enabled in a gating state, the gating circuitry prevents current flow from power supply 105 to motor 115 at other times.

Processing circuitry 112-1, 112-2, and 112-3 are representative of one or more processors, processing cores, or processing circuits capable of interfacing with power supply 105 to receive power from supply lines 305, 308, and 311, respectively, monitoring the voltage of respective supply lines, and transmitting enable signals (also referred to as gating signals) to gating circuitry 114-1, 114-2, and 114-3, respectively, to control current flow to motor 115. The processing circuitry may perform soft-start operations by which the processing circuitry controls current flow from power supply 105 to motor 115 through respective gating circuitry based on controlling states (e.g., on, off) of respective gating circuitry. More specifically, the processing circuitry generates and produces enable signals to control the states of respective gating circuitry based on desired firing angles associated with the respective gating circuitry, based on the voltage from power supply 105, and based on reference signal 302 (e.g., a reference voltage). The processing circuitry may be enabled and disabled to perform such soft-start operations based on enable signal 301 (e.g., an enable signal from a different processor, a signal generated based on a physical switch). Examples of such processor(s) of processing circuitry 112-1, 112-2, and 112-3 include - but are not limited to - microcontrollers, general purpose processing units, central processing units (CPUs), graphical processing units (GPUs), digital signal processors (DSPs), application specific processors or circuits (e.g., ASICs), and logic devices (e.g., FPGAs), as well as any other type of processing device, combinations, or variations thereof.

Gating circuitry 114-1, 114-2, and 114-3 are representative of various electronic and electro-mechanical elements capable of interfacing with power supply 105 to receive power from supply lines 305, 308, and 311, respectively, with processing circuitry 112-1, 112-2, and 112-3, respectively, to receive respective enable signals, and with motor 115 to provide power to phase inputs 307, 310, and 313 of motor 115, respectively, at various times based on the respective enable signals. In various examples, each one of gating circuitry 114-1, 114-2, and 114-3 includes a switching sub-circuit that includes a pair of gating assemblies. Each switching sub-circuit is coupled to a respective supply line of power supply 105 and to a respective phase input of motor 115 to control an amount of power provided from power supply 105 to motor 115 for a given phase.

Logic gates 306, 309, and 312 are representative of digital logic elements coupled between processing circuitry 112-1, 112-2, and 112-3 and gating circuitry 114-1, 114-2, and 114-3, respectively. Logic gates 306, 309, and 312 are capable of providing received enable signals to respective ones of gating circuitry 114-1, 114-2, and 114-3, based on the states (e.g., 0, 1) of the enable signals received by logic gates 306, 309, and 312. In various examples, logic gates 306, 309, and 312 include OR gates. Other digital logic gates, or variations and combinations thereof may instead, or additionally, be contemplated.

Logic gate 306 includes a first input coupled to an output of processing circuitry 112-1, a second input coupled to an output of processing circuitry 112-3, and an output coupled to an input of gating circuitry 114-1. Logic gate 309 includes a first input coupled to an output of processing circuitry 112-2, a second input coupled to an output of processing circuitry 112-1, and an output coupled to an input of gating circuitry 114-2. Logic gate 312 includes a first input coupled to an output of processing circuitry 112-3, a second input coupled to an output of processing circuitry 112-2, and an output coupled to an input of gating circuitry 114-3.

Referring to a single switching sub-circuit for the sake of simplicity and brevity, such as a switching sub-circuit of gating circuitry 114-1, the switching sub-circuit includes a pair of gating assemblies, although additional gating assemblies may be included in each switching sub-circuit. A first gating assembly includes a transistor and a diode coupled to each other, and a second gating assembly includes another transistor and diode coupled to each other. In various examples, the transistors are metal-oxide semiconductor field effect transistors (MOSFETs). In some examples, the transistors may instead be insulated-gate bipolar transistors (IGBTs), junction field effect transistors (JFETs), bipolar junction transistors (BJTs), or other types of transistors, as well as combinations or variations of transistors. Similar components and configurations thereof may be implemented for other switching sub-circuits of gating circuitry 114-2 and 114-3 as well.

The transistors of the switching sub-circuits each include a first current path terminal (e.g., a drain), a second current path terminal (e.g., a source), a control terminal (e.g., a gate), and a body terminal. The diodes of the switching sub-circuits may be forward-biased diodes each including an anode terminal and a cathode terminal. In some examples, the diodes are external diodes relative to respective transistors. In some examples, the diodes are instead diodes included in respective transistor designs (e.g., body diodes). For example, with respect to the switching sub-circuit of gating circuitry 114-1, the first gating assembly may be configured to couple to supply line 305 of power supply 105, to logic gate 306, to processing circuitry 112-1, and to the second gating assembly of this switching sub-circuit, and the second gating assembly may be configured to couple to phase input 307 of motor 115, to logic gate 306, and to processing circuitry 112-1. With respect to the switching sub-circuit of gating circuitry 114-2, the first gating assembly may be configured to couple to supply line 308, to logic gate 309, to processing circuitry 112-2, and to the second gating assembly of this switching sub-circuit, and the second gating assembly may be configured to couple to phase input 310 of motor 115, to logic gate 309, and to processing circuitry 112-2. With respect to the switching sub-circuit of gating circuitry 114-3, the first gating assembly may be configured to couple to supply line 311, to logic gate 312, to processing circuitry 112-3, and to the second gating assembly of this switching sub-circuit, and the second gating assembly may be configured to couple to phase input 313 of motor 115, to logic gate 312, and to processing circuitry 112-3. The gating assemblies can receive enable signals from respective processing circuitry via respective logic gates and can provide current flow measurements to respective processing circuitry as part of a feedback loop. Additional details of the configuration of the gating assemblies are shown and described in at least Figures 5A-5E below and are excluded here for the sake of brevity. Furthermore, additional gating processing circuitry, logic gates, and gating circuitry, as well as elements thereof (e.g., transistor-diode circuits) may be included depending on desired functionality of controller 110.

Based on logic gate 306 including an OR gate, gating circuitry 114-1 receives an enable signal indicating a desire to allow current flow (e.g., 1) from supply line 305 to phase input 307 when processing circuitry 112-1 or 112-3 output the enable signal with such a value. Similarly, gating circuitry 114-2 receives an enable signal indicating the desire to allow current flow from supply line 308 to phase input 310 when processing circuitry 112-1 or 112-2 output the enable signal with such a value. Also, gating circuitry 114-3 receives an enable signal indicating the desire to allow current flow from supply line 311 to phase input 313 when processing circuitry 112-2 or 112-3 output the enable signal with such a value.

In this configuration, when the transistors of the gating assemblies are controlled to operate in a non-gating state (e.g., processing circuitry 112-1 transmits enable signals to the control terminals of the transistors via logic gate 306 to cause the transistors to function as closed switches allowing current flow through the current path terminals of the transistors), current flows from a respective supply line to a respective phase input to power motor 115. When the transistors are controlled to operate in a gating state (e.g., processing circuitry 112 transmits enable signals to the control terminals of the transistors to cause the transistors to function as open switches preventing current flow through the current path terminals of the transistors, current flow is prevented from power supply 105 through the transistors to motor 115. To enable or disable such gating/switching functionality of the transistors, processing circuitry 112 may change the voltage provided to the control terminals of the transistors such that the transistor functions like an open switch or a closed switch based on the voltage drop across terminals of the transistors. Processing circuitry 112-1, 112-2, and 112-3 can control both transistors at the same time and at different times to cause varying amounts of power from power supply 105 to be provided to motor 115 via respective supply lines and phase inputs. In this way, controller 110 can perform a soft-start of motor 115 to reduce voltage spikes induced by motor 115 and prevent damage to motor 115 during start-up operations.

Motor 115 is representative of any type of motors operating in an industrial, commercial, industrial automation, or similar environment. In operating environment 300, motor 115 includes an AC motor, such as a three-phase AC induction motor, including phase inputs 307, 310, and 313. Phase input 307 is representative of a first input of motor 115 corresponding to a first phase of AC power, phase 310 is representative of a second input of motor 115 corresponding to a second phase of the AC power, and phase 313 is representative of a third input of motor 115 corresponding to a third phase of the AC power. In particular, phase input 307 is coupled to receive power from gating circuitry 114-1, phase input 310 is coupled to receive power from gating circuitry 114-2, and phase input 313 is coupled to receive power from gating circuitry 114-3. Upon receiving power, motor 115 outputs power to a load, such as one or more industrial or commercial devices, to enable functionality of the load.

In operation, when enable signal 301 includes a value indicative of enabling a soft-start of motor 115 (e.g., 1), power supply 105 provides power to controller 110, and controller 110 operates in a soft-start mode. In the soft-start mode, processing circuitry 112-1, 112-2, and 112-3 monitor voltages of respective supply lines and transmit enable signals to respective logic gates based on the voltages and based on desired firing angles associated with elements (e.g., transistors) of respective ones of gating circuitry 114. In various embodiments, a firing angle corresponds to a timing at which elements (e.g., transistors) of gating circuitry 114-1, 114-2, and 114-3 are controlled to operate in a gating or non-gating state. When gating circuitry 114-1, 114-2, or 114-3 is enabled to operate in a non-gating state (i.e., respective transistors are controlled to operate as closed switches), via an enable signal with an enable value (e.g., 1) from processing circuitry 112-1, 112-2, or 112-3, respectively, power supply 105 drives power from to motor 115 via the gating circuitry. When controlled to operate in a gating state (i.e., respective transistors are controlled to operate as open switches), via an enable signal of the opposite value (e.g., 0) from processing circuitry 112-1, 112-2, or 112-3, gating circuitry 114-1, 114-2, or 114-3, respectively, prevents (or gates) current flow from power supply 105 to motor 115. Based on varying voltage, current, and different desired firing angles relative to time, the processing circuitry can enable and disable states of the gating circuitry via enable signals to perform a soft-start of motor 115, such as described by methods 200 and 201 of Figures 2A and 2B, respectively, above.

When enable signal 301 includes a value indicative of disabling the soft-start of motor 115 (e.g., 0), controller 110 may operate in a bypass mode in which the soft-start functionality may be bypassed. In the bypass mode, power supply 105 may directly provide power to motor 115. In some examples, enable signal 301 may transition controller 110 from the soft-start mode to the bypass mode based on motor 115 reaching a run-time operational voltage. In some examples, enable signal 301 may indicate the bypass mode when soft-start functionality is not required of controller 110.

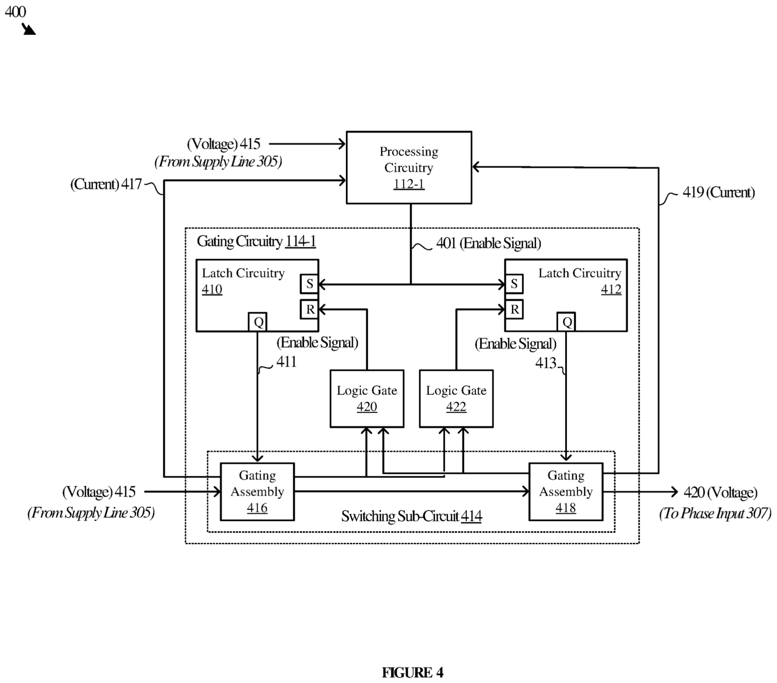

**Figure 4** illustrates an example block diagram of a soft-start motor controller in accordance with some embodiments of the present technology. Figure 4 includes block diagram 400, which is representative of an example implementation of a single-phase portion of controller 110 of operating environments 100 and 300. In particular, block diagram 400 includes processing circuitry 112-1 and gating circuitry 114-1 of operating environment 300.

Processing circuitry 112-1, among other processing circuitry of controller 110, is representative of one or more processors, processing cores, or processing circuits capable of receiving voltage 415 from supply line 305 of power supply 105, monitoring voltage 415, and transmitting enable signal 401 to gating circuitry 114-1 to control current flow from supply line 305 to phase input 307 during a soft-start of motor 115. Examples of such processor(s) of processing circuitry 112-1 include - but are not limited to - microcontrollers, general purpose processing units, central processing units (CPUs), graphical processing units (GPUs), digital signal processors (DSPs), application specific processors or circuits (e.g., ASICs), and logic devices (e.g., FPGAs), as well as any other type of processing device, combinations, or variations thereof.

Gating circuitry 114-1, among other gating circuitry of controller 110, is representative of various electronic and electro-mechanical elements capable of interfacing with power supply 105 to receive voltage 415 from supply line 305, and with motor 115 to provide voltage 420 to phase input 307 based on enable signal 401 provided to gating circuitry 114-1 by processing circuitry 112-1. To perform such operations, gating circuitry 114-1 includes latch circuitry 410, latch circuitry 412, switching sub-circuit 414, logic gate 420, and logic gate 422.

Latch circuitry 410 and latch circuitry 412 are representative of one or more latches, flip-flops, or other state storage devices capable of receiving enable signal 401 from processing circuitry 112-1, storing a state of enable signal 401 (e.g., 0, 1) at a given time, and outputting enable signals 411 and 413, based on enable signal 401, to switching sub-circuit 414. Both latch circuitry 410 and 412 include a set input, a reset input, and an output. The set inputs of latch circuitry 410 and 412 are coupled to processing circuitry 112-1 and controls a value to be latched. The reset inputs of latch circuitry 410 and 412 are coupled to outputs of logic gates 420 and 422, respectively, and controls a reset of the latched value. The outputs of latch circuitry 410 and 412 are coupled to switching sub-circuit 414 such that the latched values of latch circuitry 410 and 412 are provided to gating assemblies 416 and 418, respectively.

Switching sub-circuit 414 is representative of various circuitry capable of allowing current flow from supply line 305 to phase input 307 based on enable signals 411 and 413. Additionally, switching sub-circuit 414 is capable of preventing current flow from supply line 305 to phase input 307 based on enable signals 411 and 413. As illustrated in operating environment 400, gating assembly 416 is configured to couple to supply line 305 to receive voltage 415. Gating assembly 416 is also coupled to provide current 417 to processing circuitry 112-1, a voltage based on voltage 415 to gating assembly 418, and an indication of current flow through gating assembly 416 to logic gates 420 and 422. Gating assembly 418 is configured to couple to phase input 307 of motor 115, and is also coupled to provide current 419 to processing circuitry 112-1 and an indication of current flow through gating assembly 418 to logic gates 420 and 422.

In various examples, gating assemblies 416 and 418 each include a transistor (e.g., a MOSFET, IGBT, JFET, BJT) and a diode coupled to each other. The transistors each include a first current path terminal (e.g., a drain), a second current path terminal (e.g., a source), a control terminal (e.g., a gate), and a body terminal. The diodes of the switching sub-circuits may be forward-biased diodes each including an anode terminal and a cathode terminal. In some examples, the diodes are external diodes relative to respective transistors. In some examples, the diodes are instead diodes included in respective transistor designs (e.g., body diodes). In an example configuration, with respect to the transistor of gating assembly 416, the first current path terminal of this transistor is configured to couple to supply line 305, the control terminal is coupled to receive enable signal 411 from latch circuitry 410 and coupled to provide the indication of current flow to logic gates 420 and 422, the body terminal is coupled to the second current path terminal, and the second current path terminal is coupled to the transistor of gating assembly 416. The diode of gating assembly 416 may be coupled to the first and second current path terminals of the transistor of gating assembly 416. With respect to the transistor of gating assembly 418, the first current path terminal of this transistor is coupled to the second current path terminal of the transistor of gating assembly 416, the control terminal is coupled to provide current 419 to processing circuitry 112-1 and to provide the indication of current flow to logic gates 420 and 422, the body terminal is coupled to the first current path terminal, and the second current path terminal is configured to couple to phase input 307. Additional details of the configuration of the gating assemblies are shown and described in at least Figures 5A-5E below.

Logic gates 420 and 422 are representative of digital logic elements coupled to receive indications of current flow from gating assemblies 416 and 418 and coupled to provide a reset signal to latch circuitry 410 and 412, respectively, based on the states (e.g., 0, 1) of the indications received by gating assemblies 416 and 418. In various examples, logic gates 420 and 422 include OR gates. As such, when either the indication from gating assembly 416 or the indication from gating assembly 418 include a value indicative of a lack of current flow (e.g., 1), logic gates 420 and 422 output a reset signal including a value of "1" to latch circuitry 410 and 412, respectively, to reset the latched values (e.g., enable signal 411, enable signal 413) of respective latching circuitry. Latching circuitry 410 and/or latching circuitry 412 can then identify a value of enable signal 401 and set respective output enable signals to the value of enable signal 401. Other digital logic gates, or variations and combinations thereof may instead, or additionally, be contemplated.

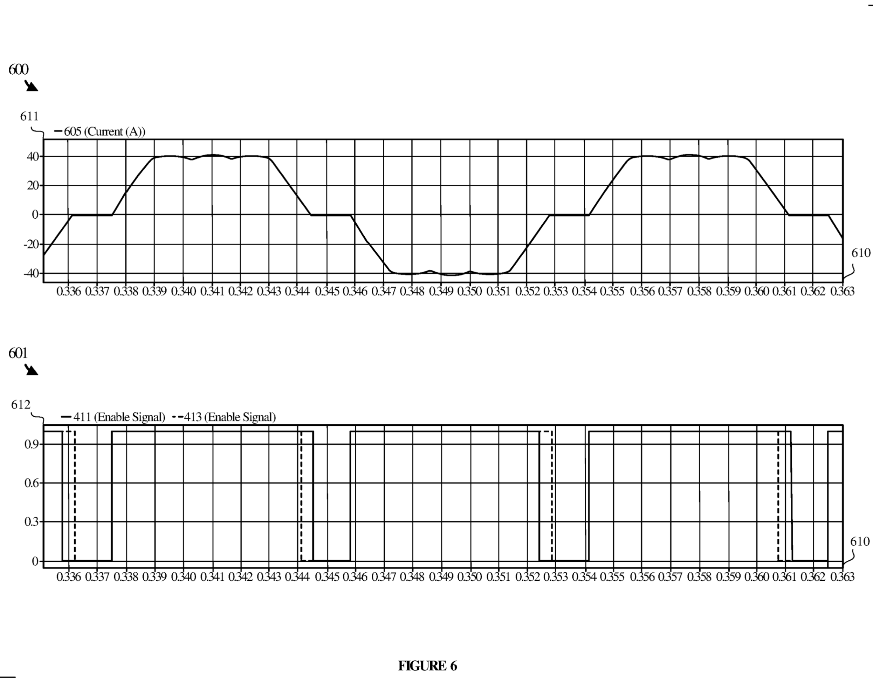

In operation, the elements of operating environment 400 may be configured to perform soft-start motor control processes, such as method 200 of Figure 2A. Figure 6 below corresponds to an operation of operating environment 400 and illustrates sample current flow through switching sub-circuit 414 while in operation.

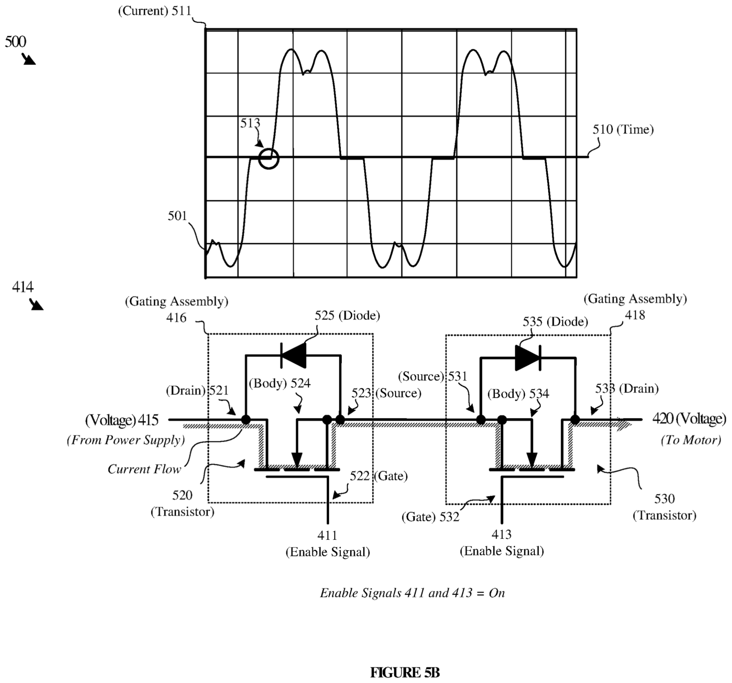

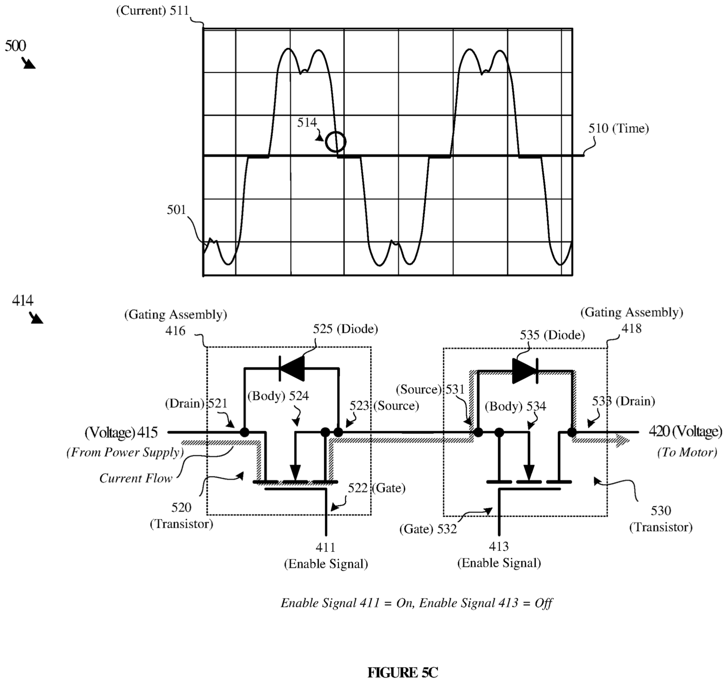

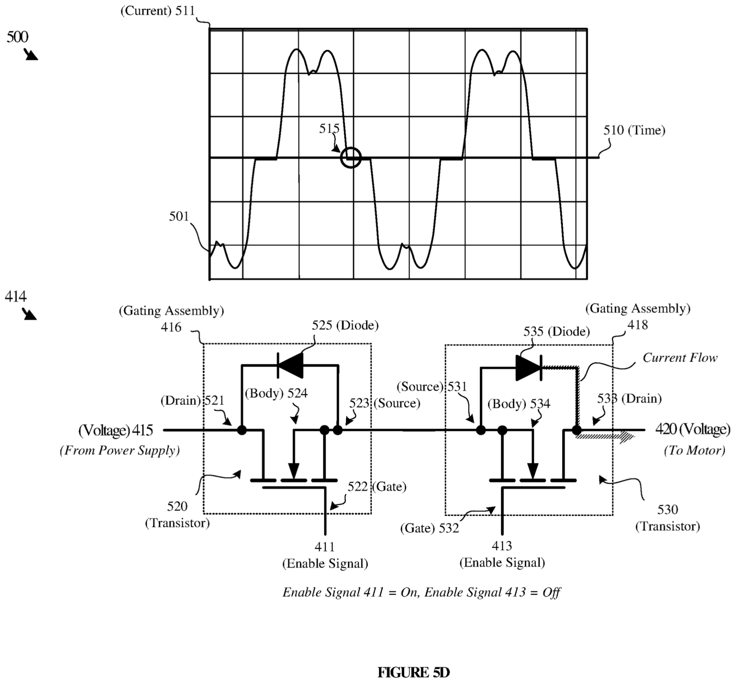

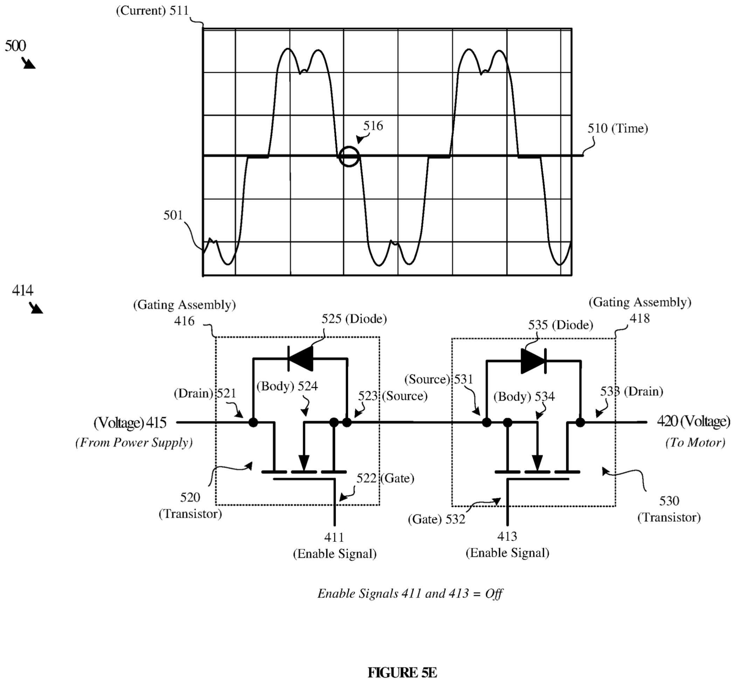

**Figures 5A****,** **5B****,** **5C****,** **5D****, and** **5E** illustrate example aspects of gating circuitry of a soft-start motor controller and resulting current flow through the elements during soft-start operations in accordance with some embodiments of the present technology. Figures 5A, 5B, 5C, 5D, and 5E each include switching sub-circuit 414 and graphical representation 500 that shows current waveform 501 representative of current 511 measured at an output of switching sub-circuit 414 relative to time 510. Each Figure indicates a current value at a different time and a corresponding operating mode of gating assemblies 416 and 418 of switching sub-circuit 414 based on enable signals 411 and 413, respectively, during a soft-start of a motor (e.g., motor 115).

Referring generally to switching sub-circuit 414 shown in each of Figures 5A, 5B, 5C, 5D, and 5E, switching sub-circuit 414 is representative of circuitry capable of operating in various modes to allow or restrict current flow from a power supply to a motor during soft-start operations. In various examples, switching sub-circuit 414 includes gating assemblies 416 and 418. Gating assemblies 416 and 418 are representative of circuits capable of allowing current flow through elements thereof based on a first state (e.g., 1) of an enable signal, and preventing current flow through elements thereof based on a second state (e.g., 0) of the enable signal.

Gating assembly 416 is configured to couple to a power supply (e.g., power supply 105) to receive voltage 415, and is coupled to gating assembly 418 and to processing circuitry (not shown) (e.g., processing circuitry 112-1). More particularly, gating assembly 416 includes transistor 520 and diode 525 configured to couple to the power supply. Transistor 520 includes drain 521 (e.g., a current path terminal), gate 522 (e.g., a control terminal), source 523 (e.g., a current path terminal), and body 524. Diode 525 includes an anode terminal and a cathode terminal.

Gating assembly 418 is coupled to gating assembly 416 and to the processing circuitry, and is also configured to couple to a motor (e.g., motor 115). Gating assembly 418 includes transistor 530 and diode 535, both of which are coupled to elements of gating assembly 416 and to the motor. Transistor 530 includes source 531 (e.g., a current path terminal), gate 532 (e.g., a control terminal), drain 533 (e.g., a current path terminal), and body 534. Diode 535 includes an anode terminal and a cathode terminal.

With respect to a configuration of gating assembly 516, drain 521 is coupled to the power supply to receive voltage 415, gate 522 is coupled to the processing circuitry to receive enable signal 411, source 523 is coupled to source 531, and body 524 is coupled to source 523. The anode terminal of diode 525 is coupled to source 523, and the cathode terminal of diode 525 if coupled to drain 521. With respect to the configuration of gating assembly 418, source 531 is coupled to source 523, gate 532 is coupled to the processing circuitry to receive enable signal 413, drain 533 is coupled to the motor, and body 534 is coupled to source 531. The anode terminal of diode 535 is coupled to source 531, and the cathode terminal of diode 535 is coupled to drain 533.

Referring now to Figure 5A, Figure 5A shows an example scenario when enable signals 411 and 413 are "off" (i.e., both transistors 520 and 530 operate as open switches), resulting in no current flow from the power supply to the motor through gating assemblies 416 and 418. The lack of current flow through switching sub-circuit 414 is depicted in current waveform 501 of graphical representation 500 at time 512.

Next, in Figure 5B, Figure 5B shows an example scenario when enable signals 411 and 413 are "on" (i.e., both transistors 520 and 530 operate as closed switches), resulting in current flow from the power supply to the motor through transistors 520 and 530. The amount of current flow through switching sub-circuit 414 is depicted in current waveform 501 at time 513 and corresponds to an amount of voltage 415 provided to switching sub-circuit 414 from the power supply. To determine to enable both transistors 520 and 530, the processing circuitry monitors voltage 415, identifies a first firing angle associated with transistors 520 and 530, and determines whether the first firing angle is reached based on voltage 415. In this example scenario, the processing circuitry determines the first firing angle is reached and provides enable signals 411 and 413 having values indicative of enabling current flow (e.g., 1) to gates 522 and 532, respectively.

Figure 5C shows an example scenario occurring after time 513 when enable signal 411 is "on" and enable signal 413 is "off", resulting in current flow from the power supply to the motor through transistor 520 and diode 535. The amount of current flow through switching sub-circuit 414 is depicted in current waveform 501 at time 514 and corresponds to an amount of voltage 415 provided to switching sub-circuit 414 from the power supply. The processing circuitry determines to disable transistor 530 via enable signal 413 based on monitoring voltage 415 and based on determining that voltage 415 (or voltage 420) is approaching a zero-cross event. In some embodiments, the processing circuitry may instead, or additionally, determine to disable transistor 530 based on monitoring current output by the power supply and determining that the current is approaching the zero. Regardless, prior to voltage 415 reaching zero-cross (e.g., zero volts) (or the current reaching zero-cross, e.g., zero amps), the processing circuitry gates transistor 530, however, current still flows to the motor through diode 535 (at least temporarily) based on the configuration of diode 535 relative to the power supply and the motor. In this example scenario, the processing circuitry determines voltage 415, and consequently, the current through switching sub-circuit 414, is nearing zero-cross (e.g., less than 500 mA) at time 514. It may be appreciated that the processing circuitry turns off transistor 530 at any time after time 513 and before zero-cross is reached as the configuration of switching sub-circuit 414 may allow current flow to the motor despite transistor 530 being off.

Referring next to Figure 5D, Figure 5D shows an example scenario occurring after time 514 and prior to a zero-cross event (when voltage 415 transitions from one polarity to another and reaches zero volts at least temporarily) when enable signal 411 is "on" and enable signal 413 is "off". However, unlike the example scenario of Figure 5C, in Figure 5D, current flow is prevented from the power supply to the motor based on the configuration of diode 535 and based on the amount of voltage 415 falling below a threshold voltage. As such, the current flow through switching sub-circuit 414 eventually falls to zero at, or shortly after, time 515, which advantageously may reduce or eliminate spikes in voltage 420 received by the motor.

Figure 5E shows an example scenario occurring after time 514 near or during the zero-cross event when both enable signals 411 and 413 are "off" resulting in no current flow from the power supply to the motor through switching sub-circuit 414 as depicted in current waveform 501 at time 516. In determining to turn off transistor 520 at time 516, the processing circuitry monitors voltage 415 and the amount of current flow through transistor 520. Upon determining that the amount of current flow falls below a threshold current, the processing circuitry disables transistor 520 via enable signal 411. In some alternate scenarios, at time 516, the processing circuitry continues to provide enable signal 411 to gate 522 with an "on" value despite reaching zero-cross because voltage might not flow through transistor 520 regardless of whether transistor 520 is enabled or not.

After time 516, the processing circuitry can monitor voltage 415 and enable transistors 520 and 530 based on reaching further firing angles to continue the soft-start operations of the motor after voltage 415 increases again to a non-zero value (in the opposite polarity) after the zero-cross event. Additionally, upon approaching a further zero-cross event before a transition from negative voltage to positive voltage, the processing circuitry can disable transistor 520 to bypass transistor 520 before eventually preventing current flow through switching sub-circuit 414 at the further zero-cross event.

**Figure 6** illustrates example graphical representations related to a soft-start of a motor in accordance with some embodiments of the present technology. Figure 6 shows graphical representation 600 representative of sample results of current 605 produced by gating elements of a soft-start motor controller relative to time 610 and current 611. Figure 6 also shows graphical representation 601 representative of logical states (e.g., 0, 1) of enable signals 411 and 413 provided to the gating elements relative to time 610 and state 612.

Current 605 may be measured at an output of switching sub-circuit 414 of operating environment 400, and as such, the following description references elements of Figures 4 and 5A. Current 605 is discussed in parallel with enable signals 411 and 413 as the change in logical states of the enable signals is directly correlated to current 605 relative to time 610. The logical states include a high logical state value (e.g., 1) corresponding to an "on" state of a respective transistor of switching sub-circuit 414 (e.g., transistor 520, transistor 530), and a low logical state value (e.g., 0) corresponding to an "off" state of a respective transistor of switching sub-circuit 414. When an enable signal includes a high logical state, a transistor can allow current flow through respective current path terminals. Contrarily, when an enable signal includes a low logical state value, a transistor prevents current flow through respective current path terminals.

At the start of time 610, enable signals 411 and 413 include high logical state values, and thus, current flow occurs from a power supply (e.g., power supply 105) to a motor (e.g., motor 115) through transistors 520 and 530 of switching sub-circuit 414. Current 605 includes a non-zero negative value corresponding to a negative polarity of the voltage fed to switching sub-circuit 414 by the power supply. As the current output by the power supply approaches zero-cross, processing circuitry 112-1 transitions enable signal 411 from the high logical state to the low logical state, turning off transistor 520. When enable signal 411 includes the low logical state value, current 605 bypasses transistor 520 and flows through diode 525 and further through transistor 530. At, or near, zero-cross, current 605 falls to approximately zero (0) Amps, and current flow is prevented by diode 525. At this time, processing circuitry 112-1 transitions enable signal 413 from the high logical state to the low logical state, turning off transistor 530, and thus, preventing current flow through switching sub-circuit 414.

After zero-cross, processing circuitry 112-1 determines that a firing angle is reached based on the voltage from the power supply crossing zero volts and becoming a non-zero positive voltage. As a result of determining that the firing angle is reached, processing circuitry 112-1 transitions both enable signals 411 and 413 to the high logical state allowing current flow through switching sub-circuit 414. In effect, current 605 rises to a positive non-zero current value.

As the voltage, and consequently current 605, approaches zero-cross again (e.g., between 0.344 and 0.345 seconds), processing circuitry 112-1 determines that the current of the power supply and current 605 are near zero-cross. Upon determining an approach to zero-cross, processing circuitry 112-1 transitions enable signal 413 to the low logical state. As a result, transistor 530 is disabled, and current flows through transistor 520 and through diode 535 bypassing transistor 530. At, or near, zero-cross, current 605 falls to approximately zero (0) Amps, and current flow is prevented by diode 535. At this time, processing circuitry 112-1 transitions enable signal 411 from the high logical state to the low logical state, turning off transistor 520, and thus, preventing current flow through switching sub-circuit 414.

The above process may be repeated by processing circuitry 112-1, among other processing circuitry responsible for additional voltage phases (e.g., processing circuitry 112-2, processing circuitry 112-3), until soft-start operations are completed and the motor reaches a run-time operational voltage.

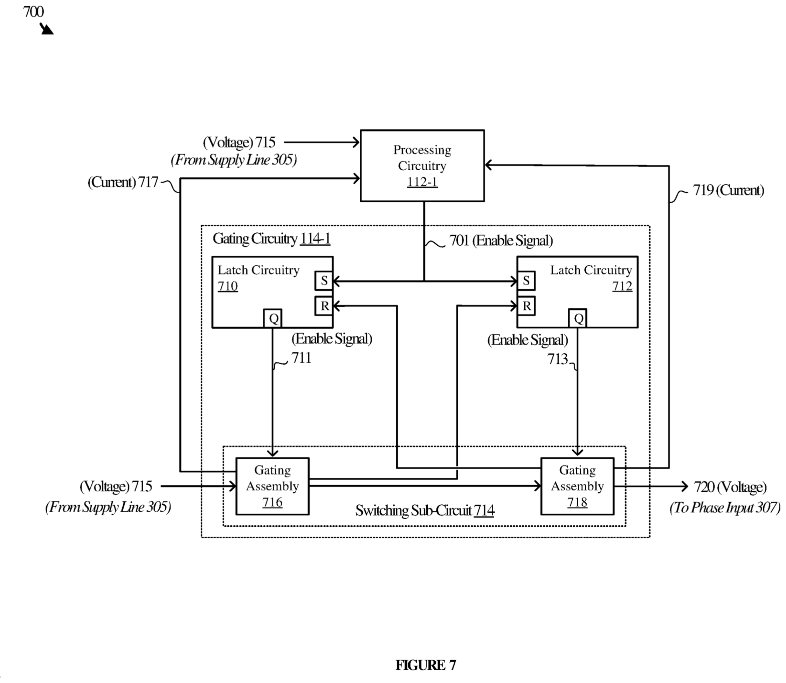

**Figure 7** illustrates an example block diagram of a soft-start motor controller in accordance with some embodiments of the present technology. Figure 7 includes block diagram 700, which is representative of an example implementation of a single-phase portion of controller 110 of operating environments 100 and 300. In particular, block diagram 700 includes processing circuitry 112-1 and gating circuitry 114-1, which further includes latch circuitry 710, latch circuitry 712, and switching sub-circuit 714.

Processing circuitry 112-1, among other processing circuitry of controller 110, is representative of one or more processors, processing cores, or processing circuits capable of receiving voltage 715 from supply line 305 of power supply 105, monitoring voltage 715, and transmitting enable signal 401 to gating circuitry 114-1 to control current flow from supply line 305 to phase input 307 during a soft-start of motor 115. Examples of such processor(s) of processing circuitry 112-1 include - but are not limited to - microcontrollers, general purpose processing units, central processing units (CPUs), graphical processing units (GPUs), digital signal processors (DSPs), application specific processors or circuits (e.g., ASICs), and logic devices (e.g., FPGAs), as well as any other type of processing device, combinations, or variations thereof.

Gating circuitry 114-1, among other gating circuitry of controller 110, is representative of various electronic and electro-mechanical elements capable of interfacing with power supply 105 to receive voltage 715 from supply line 305, and with motor 115 to provide voltage 720 to phase input 307 based on enable signal 701 provided to gating circuitry 114-1 by processing circuitry 112-1. To perform such operations, gating circuitry 114-1 includes latch circuitry 710, latch circuitry 712, switching sub-circuit 714, logic gate 720, and logic gate 722.

Latch circuitry 710 and latch circuitry 712 are representative of one or more latches, flip-flops, or other state storage devices capable of receiving enable signal 701 from processing circuitry 112-1, storing a state of enable signal 701 (e.g., 0, 1) at a given time, and outputting enable signals 711 and 713, based on enable signal 701, to switching sub-circuit 714. Both latch circuitry 710 and 712 include a set input, a reset input, and an output. The set inputs of latch circuitry 710 and 712 are coupled to processing circuitry 112-1 and controls a value to be latched. The reset inputs of latch circuitry 710 and 712 are coupled to gating assemblies 718 and 716, respectively, and control a reset of respective latched values. The outputs of latch circuitry 710 and 712 are coupled to switching sub-circuit 714 such that the latched values of latch circuitry 710 and 712 are provided to gating assemblies 716 and 718, respectively.

Switching sub-circuit 714 is representative of various circuitry capable of allowing current flow from supply line 305 to phase input 307 based on enable signals 711 and 713 (e.g., switching sub-circuit 414). Additionally, switching sub-circuit 714 is capable of preventing current flow from supply line 305 to phase input 307 based on enable signals 711 and 713. As illustrated in operating environment 700, gating assembly 716 is configured to couple to supply line 305 to receive voltage 715. Gating assembly 716 is also coupled to provide current 717 to processing circuitry 112-1, a voltage based on voltage 715 to gating assembly 718, and an indication of current flow through gating assembly 716 to latch circuitry 712. Gating assembly 718 is configured to couple to phase input 307 of motor 115, and is also coupled to provide current 719 to processing circuitry 112-1 and an indication of current flow through gating assembly 718 to latch circuitry 710.

In various examples, gating assemblies 716 and 718 each include a transistor (e.g., a MOSFET, IGBT, JFET, BJT) and a diode coupled to each other, such as in a configuration illustrated in Figure 5A. The transistors each include a first current path terminal (e.g., a drain), a second current path terminal (e.g., a source), a control terminal (e.g., a gate), and a body terminal. The diodes of the switching sub-circuits may be forward-biased diodes each including an anode terminal and a cathode terminal. In an example configuration, with respect to the transistor of gating assembly 716, the first current path terminal of this transistor is configured to couple to supply line 305, the control terminal is coupled to receive enable signal 711 from latch circuitry 710 and coupled to provide the indication of current flow to latch circuitry 712, the body terminal is coupled to the second current path terminal, and the second current path terminal is coupled to the transistor of gating assembly 716. The diode of gating assembly 716 may be coupled to the first and second current path terminals of the transistor of gating assembly 716. With respect to the transistor of gating assembly 718, the first current path terminal of this transistor is coupled to the second current path terminal of the transistor of gating assembly 716, the control terminal is coupled to provide current 719 to processing circuitry 112-1 and to provide the indication of current flow to latch circuitry 710, the body terminal is coupled to the first current path terminal, and the second current path terminal is configured to couple to phase input 307.

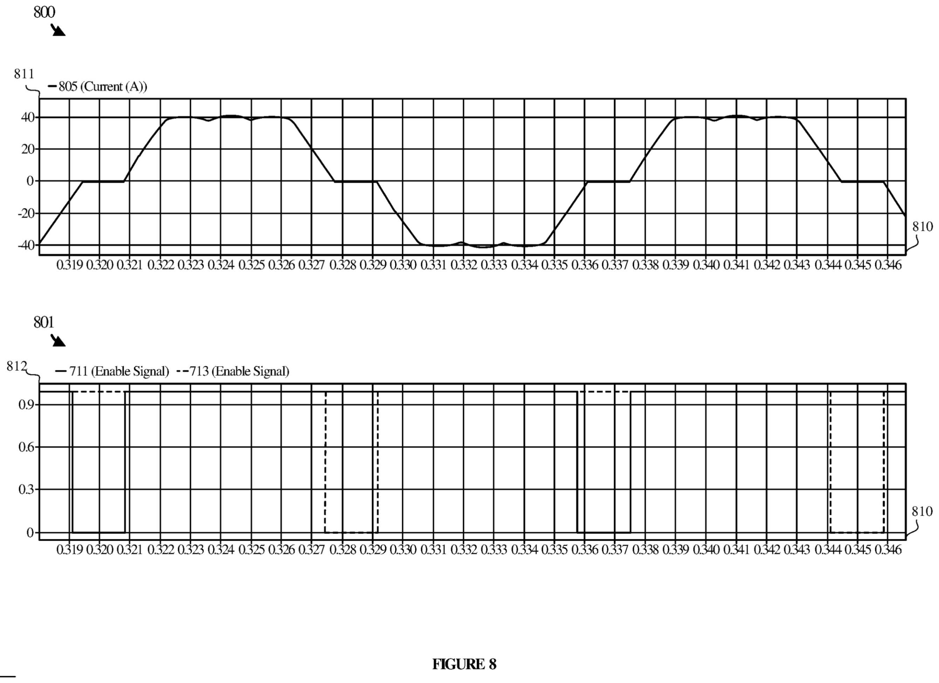

In operation, the elements of operating environment 700 may be configured to perform soft-start motor control processes, such as method 201 of Figure 2B. Figure 8 below corresponds to an operation of operating environment 700 and illustrates sample current flow through switching sub-circuit 714 while in operation.

**Figure 8** illustrates example graphical representations related to the gating of elements of a soft-start motor controller and resulting output current of the elements in accordance with some embodiments of the present technology. Figure 8 shows graphical representation 800 representative of sample results of current 805 produced by gating elements of a soft-start motor controller relative to time 810 and current 811. Figure 8 also shows graphical representation 801 representative of logical states (e.g., 0, 1) of enable signals 411 and 413 provided to the gating elements relative to time 810 and state 812.

Current 805 may be measured at an output of switching sub-circuit 714 of operating environment 700, and as such, the following description references elements of Figures 7 and 5A. Current 805 is discussed in parallel with enable signals 711 and 713 as the change in logical states of the enable signals is directly correlated to current 805 relative to time 810. The logical states include a high logical state value (e.g., 1) corresponding to an "on" state of a respective transistor of switching sub-circuit 714 (e.g., transistor 520, transistor 530), and a low logical state value (e.g., 0) corresponding to an "off" state of a respective transistor of switching sub-circuit 714. When an enable signal includes a high logical state, a transistor can allow current flow through respective current path terminals. Contrarily, when an enable signal includes a low logical state value, a transistor prevents current flow through respective current path terminals.

At the start of time 810, enable signals 711 and 713 include high logical state values, and thus, current flow occurs from a power supply (e.g., power supply 105) to a motor (e.g., motor 115) through transistors 520 and 530 of switching sub-circuit 714. Current 805 includes a non-zero negative value corresponding to a negative polarity of the voltage fed to switching sub-circuit 714 by the power supply.

As the current of the power supply approaches zero-cross, processing circuitry 112-1 transitions enable signal 711 from the high logical state to the low logical state, turning off transistor 520. When enable signal 711 includes the low logical state value, current 605 bypasses transistor 520 and flows through diode 525 and further through transistor 530. At, or near, zero-cross, current 605 falls to approximately zero (0) Amps, and current flow is prevented by diode 525. At this time, processing circuitry 112-1 might not transition enable signal 713 from the high logical state to the low logical state (as in Figure 6), as diode 525 prevents current flow through switching sub-circuit 714 irrespective of the logical state of enable signal 713 and the operational state of transistor 530.

After zero-cross, processing circuitry 112-1 determines that a firing angle is reached based on the voltage from the power supply crossing zero volts and becoming a non-zero positive voltage. As a result of determining that the firing angle is reached, processing circuitry 112-1 transitions enable signal 711 to the high logical state allowing current flow through switching sub-circuit 714. In effect, current 605 rises to a positive non-zero current value.

As the current of the power supply, and consequently current 605, approaches zero-cross again (e.g., between 0.327 and 0.328 seconds), processing circuitry 112-1 determines that the voltage and current 605 are nearing zero-cross. Upon determining the approach of zero-cross, processing circuitry 112-1 transitions enable signal 713 to the low logical state. As a result, transistor 530 is disabled, and current flows through transistor 520 and through diode 535 bypassing transistor 530. At, or near, zero-cross, current 605 falls to approximately zero (0) Amps, and current flow is prevented by diode 535. At this time, processing circuitry 112-1 might not transition enable signal 711 from the high logical state to the low logical state (as in Figure 6), as diode 535 prevents current flow through switching sub-circuit 714 irrespective of the logical state of enable signal 711 and the operational state of transistor 520.

The above process may be repeated by processing circuitry 112-1, among other processing circuitry responsible for additional voltage phases (e.g., processing circuitry 112-2, processing circuitry 112-3), until soft-start operations are completed, and the motor reaches a run-time operational voltage.

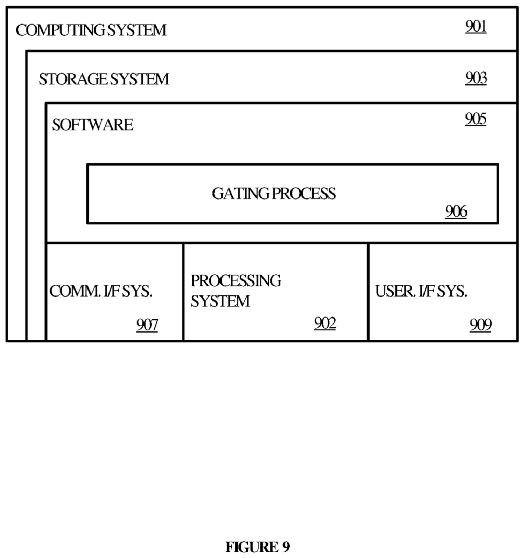

**Figure 9** illustrates computing system 901 to perform fault-managed power (FMP) generation and transmission according to an implementation of the present technology. Computing system 901 is representative of any system or collection of systems with which the various operational architectures, processes, scenarios, and sequences disclosed herein for device health collection and configuration may be employed. Computing system 901 may be implemented as a single apparatus, system, or device or may be implemented in a distributed manner as multiple apparatuses, systems, or devices. Computing system 901 includes, but is not limited to, processing system 902, storage system 903, software 905, communication interface system 907, and user interface system 909 (optional). Processing system 902 is operatively coupled with storage system 903, communication interface system 907, and user interface system 909. Computing system 901 may be representative of a cloud computing device, distributed computing device, or the like.

Processing system 902 loads and executes software 905 from storage system 903. Software 905 includes and implements gating process 906, which is representative of any of the soft-start operations, voltage monitoring, current flow monitoring, firing angle detection, transistor gating, and other processes discussed with respect to the preceding Figures. When executed by processing system 902 to provide soft-start functions, software 905 directs processing system 902 to operate as described herein for at least the various processes, operational scenarios, and sequences discussed in the foregoing implementations. Computing system 901 may optionally include additional devices, features, or functionality not discussed for purposes of brevity.

Referring still to Figure 9, processing system 902 may comprise a microprocessor and other circuitry that retrieves and executes software 905 from storage system 903. Processing system 902 may be implemented within a single processing device but may also be distributed across multiple processing devices or sub-systems that cooperate in executing program instructions. Examples of processing system 902 include general purpose central processing units, graphical processing units, application specific processors, and logic devices, as well as any other type of processing device, combinations, or variations thereof.

Storage system 903 may comprise any computer readable storage media readable by processing system 902 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which at least some of software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 902 or possibly other systems.

Software 905 (including gating process 906) may be implemented in program instructions and among other functions may, when executed by processing system 902, direct processing system 902 to operate as described with respect to the various operational scenarios, sequences, and processes illustrated herein. For example, software 905 may include program instructions for implementing a soft-start motor control process as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software, virtualization software, or other application software. Software 905 may also comprise firmware or some other form of machine-readable processing instructions executable by processing system 902.

In general, software 905 may, when loaded into processing system 902 and executed, transform a suitable apparatus, system, or device (of which computing system 901 is representative) overall from a general-purpose computing system into a special-purpose computing system customized to provide soft-start motor control instantiation thereof as described herein. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary storage, as well as other factors.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 907 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 901 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and need not be discussed at length here.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A soft-start motor control system comprising:
processing circuitry; and
gating circuitry coupled to the processing circuitry and comprising:
a first transistor including a first current path terminal coupled to an alternating current (AC) voltage supply, a second current path terminal, and a control terminal coupled to the processing circuitry;
a second transistor including a first current path terminal coupled to the second current path terminal of the first transistor, a second current path terminal coupled to an AC motor, and a control terminal coupled to the processing circuitry;
a first diode including an anode terminal coupled to the second current path terminal of the first transistor, and a cathode terminal coupled to the first current path terminal of the first transistor; and
a second diode including an anode terminal coupled to the first current path terminal of the second transistor, and a cathode terminal coupled to the second current path terminal of the second transistor;
wherein the processing circuitry is configured to:
monitor the voltage of the AC voltage supply; and
provide gating signals to the control terminals of the first and second transistors to control operations of the first and second transistors based at least in part on one or more desired firing angles and the voltage of the AC voltage supply.

2. The soft-start motor control system of claim 1, wherein:
to provide the gating signals to the control terminals of the first and second transistors, the processing circuitry is configured to:
responsive to determining that the AC voltage supply has reached a desired firing angle, transmit the gating signals to the control terminals of the first and second transistors to allow current flow from the AC voltage supply to the AC motor through respective first and second current path terminals of the first and second transistors;
prior to a current of the AC voltage supply reaching zero-cross, transmit the gating signals to the control terminal of the second transistor to prevent the current flow through the first and second current path terminals of the second transistor, wherein the current flow bypasses the second transistor via the second diode; and
responsive to determining an amount of the current flow through the first transistor falls below a current threshold, transmit the gating signals to the control terminal of the first transistor to prevent the current flow through the first and second current path terminals of the first transistor.

3. The soft-start motor control system of claim 1 or 2, wherein:
to provide the gating signals to the control terminals of the first and second transistors, the processing circuitry is configured to:
responsive to determining that the AC voltage supply has reached a desired firing angle, transmit the gating signals to the control terminals of the first and second transistors to allow current flow from the AC motor to the AC voltage supply through respective first and second current path terminals of the first and second transistors;
prior to a current of the AC voltage supply reaching zero-cross, transmit the gating signals to the control terminal of the first transistor to prevent the current flow through the first and second current path terminals of the first transistor, wherein the current flow bypasses the first transistor via the first diode; and
responsive to determining an amount of the current flow through the second transistor falls below a current threshold, transmit the gating signals to the control terminal of the second transistor to prevent the current flow through the first and second current path terminals of the second transistor.

4. The soft-start motor control system of one of claims 1 to 3, wherein:
to provide the gating signals to the control terminals of the first and second transistors, the processing circuitry is configured to:
responsive to determining that the AC voltage supply has reached a first desired firing angle, transmit the gating signals to the control terminals of the first and second transistors to allow current flow from the AC voltage supply to the AC motor through respective first and second current path terminals of the first and second transistors;
prior to a current of the AC voltage supply reaching zero-cross, transmit the gating signals to the control terminal of the second transistor to prevent the current flow through the first and second current path terminals of the second transistor, wherein the current flow bypasses the second transistor via the second diode;
responsive to determining that the AC voltage supply has reached a second desired firing angle, transmit the gating signals to the control terminals of the first and second transistors to allow current flow from the AC voltage supply to the AC motor through respective first and second current path terminals of the first and second transistors; and
prior to the current of the AC voltage supply reaching the zero-cross, transmit the gating signals to the control terminal of the first transistor to prevent the current flow through the first and second current path terminals of the first transistor, wherein the current flow bypasses the first transistor via the first diode.

5. The soft-start motor control system of one of claims 1 to 4, at least one of:
wherein the first and second transistors comprise one of metal-oxide semiconductor field-effect transistors (MOSFETs), insulated gate bipolar transistors (IGBTs), or junction field effect transistors (JFETs);
wherein the one or more desired firing angles comprise dynamic values based on states of the AC motor; and
wherein the processing circuitry is configured to bypass the providing of the gating signals to the control terminals of the first and second transistors based on a state of the AC motor.

6. The soft-start motor control system of claim 2, wherein a duration during which the processing circuitry provides the gating signals to the control terminal of the second transistor to prevent the current flow through the first and second current path terminals of the second transistor preventing the current flow from the AC voltage supply to the AC motor is based on a state of the AC motor.

7. The soft-start motor control system of one of claims 1 to 6, wherein the gating circuitry further comprises:
a third transistor including a first current path terminal coupled to the AC voltage supply, a second current path terminal, and a control terminal coupled to the processing circuitry;
a fourth transistor including a first current path terminal coupled to the second current path terminal of the third transistor, a second current path terminal coupled to the AC motor, and a control terminal coupled to the processing circuitry;
a third diode including an anode terminal coupled to the second current path terminal of the third transistor, and a cathode terminal coupled to the first current path terminal of the third transistor;
a fourth diode including an anode terminal coupled to the first current path terminal of the fourth transistor, and a cathode terminal coupled to the second current path terminal of the fourth transistor;
a fifth transistor including a first current path terminal coupled to the AC voltage supply, a second current path terminal, and a control terminal coupled to the processing circuitry;
a sixth transistor including a first current path terminal coupled to the second current path terminal of the fifth transistor, a second current path terminal coupled to the AC motor, and a control terminal coupled to the processing circuitry;
a fifth diode including an anode terminal coupled to the second current path terminal of the fifth transistor, and a cathode terminal coupled to the first current path terminal of the fifth transistor; and
a sixth diode including an anode terminal coupled to the first current path terminal of the sixth transistor, and a cathode terminal coupled to the second current path terminal of the sixth transistor.

8. The soft-start motor control system of claim 7, wherein:
the AC voltage supply comprises three outputs corresponding to phases of three-phase AC power generated by the AC voltage supply;
the AC motor comprises three inputs corresponding to the phases of the three-phase AC power;
the first current path terminal of the first transistor is coupled to a first output of the three outputs of the AC voltage supply associated with a first phase of the three-phase AC power;
the second current path terminal of the second transistor is coupled to a first input of the three inputs of the AC motor associated with the first phase of the three-phase AC power;
the first current path terminal of the third transistor is coupled to a second output of the three outputs of the AC voltage supply associated with a second phase of the three-phase AC power;
the second current path terminal of the fourth transistor is coupled to a second input of the three inputs of the AC motor associated with the second phase of the three-phase AC power;
the first current path terminal of the fifth transistor is coupled to a third output of the three outputs of the AC voltage supply associated with a third phase of the three-phase AC power; and
the second current path terminal of the sixth transistor is coupled to a third input of the three inputs of the AC motor associated with the third phase of the three-phase AC power.

9. A method of controlling a soft-start of an alternating current (AC) motor, comprising:
monitoring a current of an AC voltage supply;
responsive to determining that the AC voltage supply has reached a first desired firing angle, transmitting gating signals to control terminals of first and second transistors to allow current flow from the AC voltage supply to the AC motor through respective first and second current path terminals of the first and second transistors;
prior to the current of the AC voltage supply reaching zero-cross, transmitting the gating signals to the control terminal of the second transistor to prevent the current flow through the first and second current path terminals of the second transistor, wherein the current flow bypasses the second transistor via a first diode coupled to the second transistor; and
responsive to determining an amount of the current flow through the first transistor falls below a current threshold, transmitting the gating signals to the control terminal of the first transistor to prevent the current flow through the first and second current path terminals of the first transistor.

10. The method of claim 9, further comprising:
responsive to determining that the AC voltage supply has reached a second desired firing angle, transmitting the gating signals to the control terminals of the first and second transistors to allow current flow from the AC motor to the AC voltage supply through respective first and second current path terminals of the first and second transistors;
prior to the current of the AC voltage supply reaching the zero-cross, transmitting the gating signals to the control terminal of the first transistor to prevent the current flow through the first and second current path terminals of the first transistor, wherein the current flow bypasses the first transistor via a second diode coupled to the first transistor; and
responsive to determining an amount of the current flow through the second transistor falls below a current threshold, transmitting the gating signals to the control terminal of the second transistor to prevent the current flow through the first and second current path terminals of the second transistor.

11. The method of claim 9 or 10, wherein:
the first transistor includes the first current path terminal coupled to the AC voltage supply and to a cathode terminal of a second diode, the second current path terminal coupled to an anode terminal of the second diode, and the control terminal;
the second transistor includes the first current path terminal coupled to the second current path terminal of the first transistor, the second current path terminal coupled to the AC motor, and the control terminal; and
the first diode includes an anode terminal coupled to the first current path terminal of the second transistor, and a cathode terminal coupled to the second current path terminal of the second transistor; and
the second diode includes a cathode terminal coupled to the first current path terminal of the first transistor, and an anode terminal coupled to the second current path terminal of the first transistor.

12. The method of one of claims 9 to 11, at least one of:
wherein the first and second transistors comprise one of metal-oxide semiconductor field-effect transistors (MOSFETs), insulated gate bipolar transistors (IGBTs), or junction field effect transistors (JFETs);
wherein transmitting the gating signals to the control terminal of the first transistor to prevent the current flow through the first and second current path terminals of the first transistor responsive to determining the amount of the current flow through the first transistor falls below a current threshold comprises transmitting the gating signals for a duration based on a state of the AC motor; and
wherein the one or more desired firing angles comprise dynamic values based on states of the AC motor.

13. A method of controlling a soft-start of an alternating current (AC) motor, comprising:
monitoring a current of an AC voltage supply;
responsive to determining that the AC voltage supply has reached a first desired firing angle, transmitting gating signals to control terminals of first and second transistors to allow current flow from the AC voltage supply to the AC motor through respective first and second current path terminals of the first and second transistors;
prior to the current of the AC voltage supply reaching zero-cross, transmitting the gating signals to the control terminal of the second transistor to prevent the current flow through the first and second current path terminals of the second transistor, wherein the current flow bypasses the second transistor via a first diode coupled to the second transistor;
responsive to determining that the AC voltage supply has reached a second desired firing angle, transmitting the gating signals to the control terminals of the first and second transistors to allow current flow from the AC voltage supply to the AC motor through respective first and second current path terminals of the first and second transistors; and
prior to the current of the AC voltage supply reaching the zero-cross, transmitting the gating signals to the control terminal of the first transistor to prevent the current flow through the first and second current path terminals of the first transistor, wherein the current flow bypasses the first transistor via a second diode coupled to the first transistor.

14. The method of claim 13, wherein:
the first transistor includes the first current path terminal coupled to the AC voltage supply and to a cathode terminal of a second diode, the second current path terminal coupled to an anode terminal of the second diode, and the control terminal;
the second transistor includes the first current path terminal coupled to the second current path terminal of the first transistor, the second current path terminal coupled to the AC motor, and the control terminal;
the first diode includes an anode terminal coupled to the first current path terminal of the second transistor, and a cathode terminal coupled to the second current path terminal of the second transistor; and
the second diode includes a cathode terminal coupled to the first current path terminal of the first transistor, and an anode terminal coupled to the second current path terminal of the first transistor,
wherein preferably the first and second transistors comprise one of metal-oxide semiconductor field-effect transistors (MOSFETs), insulated gate bipolar transistors (IGBTs), or junction field effect transistors (JFETs).

15. The method of claim 13 or 14, wherein the one or more desired firing angles comprise dynamic values based on states of the AC motor.
